Europäisches Patentamt

European Patent Office

Office européen des brevets

(11) Veröffentlichungsnummer: **0 286 003**
**A1**

## (12) EUROPÄISCHE PATENTANMELDUNG

(21) Anmeldenummer: 88105203.9

(22) Anmeldetag: 30.03.88

(51) Int. Cl.⁴: **E04C 2/54**

(30) Priorität: 08.04.87 DE 8705220 U

(43) Veröffentlichungstag der Anmeldung:
12.10.88 Patentblatt 88/41

(84) Benannte Vertragsstaaten:
AT BE CH DE ES FR GB GR IT LI LU NL SE

(71) Anmelder: Mönch Kunststofftechnik GmbH
Frankfurter Strasse 32
D-6123 Bad König 1(DE)

(72) Erfinder: Mönch, Theodor Peter
Talweg 15
D-6101 Brensbach - Höllerbach(DE)

(74) Vertreter: Stoffregen, Hans-Herbert, Dr.
Dipl.-Phys. et al
Patentanwälte Strasse & Stoffregen
Salzstrasse 11a
D-6450 Hanau(DE)

(54) Durchscheinende Hohlkammerplatte.

(57) Es wird eine Stegmehrfachplatte (10) vorgeschlagen, bei der zwischen Außengurten (12, 14) zumindest zwei Innengurte (22, 24, 26, 28) dachförmig verlaufend vorhanden sind, die mit von den Innenflächen (42, 44, 46, 48) der Außengurte (12, 14) ausgehenden Vorsprüngen (50, 52, 54, 56) verbunden sind.

EP 0 286 003 A1

## Durchscheinende Hohlkammerplatte

Die Erfindung bezieht sich auf eine durchscheinende oder farblose Hohlkammerplatte aus thermoplastischem Kunststoff umfassend Hohlräume, die seitlich durch Stege und außenseitig durch Außengurte begrenzt sind, zwischen denen ein oder mehrere Innengurte Verlaufen.

Eine entsprechende auch als Stegmehrfachplatten bezeichnete Hohlkammerplatte ist z.B. dem DE-GM 82 25 408 zu entnehmen. Hohlkammerplatten werden durch Extrusion vornehmlich von Polymethylmethacrylat, Polycarbonat und Polyvinylchlorid hergestellt. Dabei werden durch die Extrusion mittels eines dem Querschnitt der Platte entsprechenden Werkzeuges gleichzeitig die Stege, die Außengurte und der Innengurt erzeugt. Nach dem Austritt des Hohlstranges aus der Extrusionsdüse werden die Außenschichten beim Durchlaufen eines Vakuumformkanals unter die Erweichungstemperatur abgekühlt. Der Innengurt und die Stege bleiben länger thermoplastisch als die Außenschichten, so daß der waagerecht angeordnete Innengurt dazu neigt, durchzuhängen.

Nach dem Stand der Technik wird dieser Nachteil dadurch behoben, daß der Innergurt -auch Mittelschicht genannt-aus einem thermoplastischen Kunststoff mit einer gegenüber dem Material der Außenschicht erhöhten Zähigkeit und/oder erhöhten Nullviskosität im Schmelzzustand besteht. Hierdurch bedingt muß das Extrusionswerkzeug besonders ausgebildet werden, wobei zumindest zwei Extruder für die verwendeten unterschiedlichen Materialien erforderlich sind.

Auch wenn in der erwähnten Gebrauchsmusterschrift die Möglichkeit aufgezeigt ist, daß rein theoretisch zwischen den Außengurten mehr als ein Innengurt vorgesehen sein kann, der eben und parallel zu den Außengurten verlaufen soll, so hat sich bei der praktischen Realisierung herausgestellt, daß die Hohlkammerplatte nicht mit mehr als einer Zwischenschicht herstellbar ist.

Stegmehrfachplatten haben sich insbesondere bei der Erstellung von Gewächshäusern, Wintergärten, Sporthallen oder bei der Verglasung von Industriebauten als vollwertiger und kostengünstiger Ersatz zu Glaseindeckungen erwiesen.

Bei Gewächshäusern besteht das Bestreben, eine erhöhte Wärmeisolierung unter weitgehendem Ausschluß von Lichtverlusten zu erzielen. So ist in "Deutscher Gartenbau", 37/1986 Seiten 1688 ff., bereits von einem Gewächshaus mit Vierfacheindeckung berichtet worden. Unter Vierfacheindeckung wird dabei eine Ausgestaltung verstanden, die aus zwei mit Abstand eingesetzte normale Polycarbonat-Hohlkammerplatten bezeichnet. Parallel hierzu wurden Bereiche mit Dreifach-Hohlkammerplatten eingedeckt.

Aufgabe der vorliegenden Erfindung ist es, eine Hohlkammerplatte der eingangs genannten Art derart auszubilden, daß gegenüber bekannten Stegmehrfachplatten eine erhöhte Isolation unter Beibehaltung einer hohen Lichtdurchlässigkeit ermöglicht wird, wobei sichergestellt sein soll, daß die Außen-und Innengurte kontrolliert zueinander beabstandet sind.

Die Aufgabe wird erfindungsgemäß dadurch gelöst, daß zumindest zwei Innengurte zwischen den Stegen angeordnet sind, die jeweils dachförmig verlaufen und mit von den Innenflächen der Außengurte ausgehenden Vorsprünge verbunden sind, wobei vorzugsweise die Innengurte im Abstand und vorzugsweise symmetrisch zur Mittellinie des Hohlraumes von den Stegen ausgehen. Durch diesen Aufbau ergibt sich für den von den Innengurten begrenzten Innenraum in etwa eine Rautenform mit zueinander beabstandeten Hälften. Dadurch, daß die Innengurte nicht parallel zu den Außengurten, sondern zu diesen unter einem spitzen Winkel verlaufen, die Innengurte jedoch selbst von den Stegen beginnend auseinanderlaufen, ist sichergestellt, daß das nach dem Stand der Technik beschriebene Durchhängen unterbleibt, das zu dem die Isolation und auch die Lichtdurchlässigkeit beeinträchtigenden Zusammenkleben zwischen den Gurten führen kann.

Vorzugsweise ist der auch als Haltesteg zu bezeichnende Vorsprung durchgehend in Längsrichtung des Hohlraumes und vom Mittenbereich der Innenfläche des Außengurts ausgehend angeordnet.

Durch die erfindungsgemäße Lehre ergibt sich der Vorteil, daß eine Stegvierfachplatte zur Verfügung gestellt wird, die gegenüber den bekannten Stegdreifachplatten einen um mehr als 30% erniedrigten K-Wert von in etwa 1,8 $W \cdot m^2 K$ aufweist. Trotz des im Vergleich zur Stegdreifachplatte zusätzlichen Innengurtes ergibt sich keine wesentliche Gewichtserhöhung, da die auch als Zwischenschichten zu bezeichnenden Innengurte vorzugsweise nur eine Wandstärke von in etwa 1/3 bis 1/10 von der der Außengurte aufweist. Die Dicke der Hohlraumplatte selbst ist entsprechend der bekannten Stegdoppel-bzw. -dreifachplatten zu wählen, d.h. in etwa 16 mm, so daß die erfindungsgemäße Hohlkammerplatte in vorhandene tragende Unterstruktionen einbringbar ist. Es bedarf demzufolge keiner geänderten Unterkonstruktion, die bei Verwendung von Vierfachverglasungen aufgrund des Gewichtes notwendig wäre.

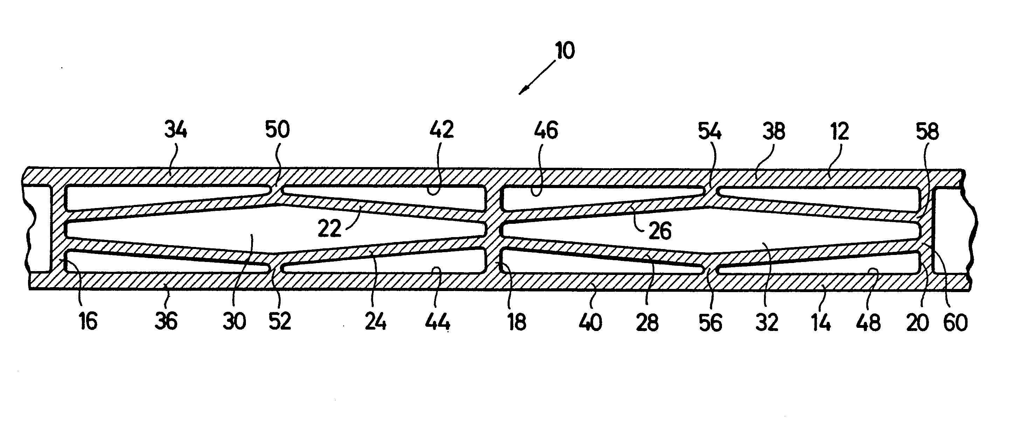

Weitere Einzelheiten, Vorteile und Merkmale der vorliegenden Erfindung ergeben sich nicht nur aus der nachfolgenden Beschreibung eines in der Zeichnung dargestellten bevorzugten Ausführungsbeispiels, sondern auch aus den Ansprüchen und den diesen zu entnehmenden Merkmalen -für sich und/oder in Kombination-.

In der einzigen Figur ist ein Querschnitt einer Hohlkammerplatte (10) in Form einer Stegvierfachplatte dargestellt. Die Hohlkammerplatte (10) besteht aus einzelnen durch Stege (16), (18) und (20) seitlich begrenzte Kammern (30) und (32), die außenseitig durch auch als Außenschichten zu bezeichnende Außengurte (12) und (14) begrenzt sind. Erfindungsgemäß sind in den Kammern (30) und (32) jeweils zwei Innengurte (22) und (24) bzw. (26) und (28) angeordnet, um einen niedrigen K-Wert und damit eine höhere Isolation bei nahezu unveränderter optischer Durchlässigkeit zu erreichen.

Die Innengurte (22) und (24) bzw. (26) und (28) sind im Vergleich zu den Außengurten (12) und (14) relativ dünn, d.h., die Wandstärke der Innengurte (22), (24), (26) und (28) beträgt in etwa 1 3 bis 1/10 der der Außengurte (12) und (14), die selbst eine Stärke von 1,5 bis 1,9 mm bei einer Plattenstärke von in etwa 16 mm zeigen. Durch die überaus geringe Stärke der Innengurte (22), (24), (26) und (28) wird zwar das Gewicht der erfindungsgemäßen Hohlkammerplatte (10) im Vergleich zu Stegdreifachplatten nicht erhöht, jedoch bestünde bei üblicher Anordnung der Innengurte die Gefahr, daß diese durchhängen und damit mit den Innenflächen der Außengurte unkontrolliert in Berührung kommen.

Erfindungsgemäß weisen daher die Innengurte (22), (24), (26) und (28) eine Dachform auf, wobei im Mittenbereich -betrachtet sowohl bezüglich der zwischen den Gurten (16) und (18) und (18) und (20) verlaufenden Außengurtabschnitte (34), (36), (38) und (40) als auch hinsichtlich der Innengurte (22), (24), (26), und (28)-selbst eine Verbindung mit den Innenflächen (42), (44), (46) und (48) der Außengurte (12) und (14) über stegförmige Vorsprünge (50), (52), (54) und (56) erfolgt. Um auch im unmittelbaren Bereich der Stege (16), (18) und (20) die Vierfachisolation zu sichern, gehen die Innengurte (22), (24), (26) und (28) im Abstand und vorzugsweise symmetrisch zur Mittellinie des jeweiligen Hohlraumes (30) und (32) von den Stegen (16), (18) und (20) aus. Die Fußpunkte, von denen zwei beispielhaft mit den Bezugszeichen (58) und (60) bezeichnet sind, sind demzufolge zueinander beabstandet.

Die in Längsrichtung der Kammern (30) und (32) verlaufenden stegförmigen Vorsprünge (50), (52), (54) und (56) weisen vorzugsweise die gleiche Stärke wie die Begrenzungsstege (16), (18) und (20) auf, also eine Stärke von in etwa 1,3 bis 1,6 mm.

Der in etwa einen rautenförmigen Querschnitt zeigende von den Innengurten (22), (24) und (26) und (28) begrenzte nicht näher bezeichnete Innenraum der Kammern (30) und (32) weist in etwa ein Volumen auf, das in der Summe der Volumina entspricht, die zwischen den Innengurten (22), (24), (26) und (28) und den Innenflächen (42), (44), (46) und (48) der Außengurte (12) und (14) vorhanden sind.

Nicht nur durch die Innengurte (22), (24), (26) und (28) ergibt sich eine erhöhte Wärmeisolierung, sondern auch dadurch, daß im Vergleich zu bekannten Stegmehrfachplatten die Stege (16), (18) und (20) im größeren Abstand zueinander angeordnet werden. Vorzugsweise beträgt bei der erfindungsgemäßen Hohlkammerplatte der Abstand zwischen den Stegen (16) und (18) bzw. (18) und (20) in etwa 62 mm.

Durch die erfindungsgemäße Hohlkammerplatte (10) wird insbesondere die Möglichkeit geschaffen, eine Verglasung mit hervorragenden wärmedämmenden und mechanischen Eigenschaften zur Verfügung zu stellen, wobei die Dicke der Platte selbst der der bekannten Stegdoppelplatten entspricht, so daß vorhandene Rahmenkonstruktionen Verwendung finden können.

## Ansprüche

1. Hohlkammerplatte (10) aus thermoplastischem Kunststoff umfassend Hohlräume (30, 32), die seitlich durch Stege (16, 18, 20) und außenseitig durch Außengurte (12, 14) begrenzt sind, zwischen denen ein oder mehrere Innengurte (22, 24, 26, 28) verlaufen,
**dadurch gekennzeichnet,**
daß zumindest zwei Innengurte (22, 24, 26, 28) in den Hohlräumen (30, 32) angeordnet sind und dachförmig verlaufen, wobei die Innengurte mit von den Innenflächen (42, 44, 46, 48) der Außengurte (12, 14) ausgehenden Vorsprüngen (50, 52, 54, 56) verbunden sind.

2. Hohlkammerplatte nach Anspruch 1,
**dadurch gekennzeichnet,**
daß der Vorsprung (50, 52, 54, 56) stegförmig ausgebildet ist und vorzugsweise in Längsrichtung des Hohlraumes (30, 32) verläuft und vom Mittenbereich der Innenfläche (42, 44, 46, 48) ausgeht.

3. Hohlkammerplatte nach zumindest Anspruch 1,
**dadurch gekennzeichnet,**
daß die Innengurte (22, 24; 26, 28) im Abstand und vorzugsweise symmetrisch zur Mittellinie des Hohlraumes (30, 32) von den Stegen (16, 18; 18, 20) ausgehen.

4. Hohlkammerplatte nach zumindest Anspruch 1,

**dadurch gekennzeichnet,**

daß der Querschnitt des von den Innengurten (22, 24; 26, 28) begrenzten Innenraums rautenförmig ist.

5. Hohlkammerplatte nach Anspruch 1,

**dadurch gekennzeichnet.**

daß die Stege (16, 18; 18, 20) einen Abstand von 55 bis 65 mm, vorzugsweise von in etwa 62 mm bei einer Hohlkammerplattendicke von vorzugsweise 16 mm aufweisen.

6. Hohlkammerplatte nach zumindest Anspruch 1,

**dadurch gekennzeichnet,**

daß die Wandstärke der Innengurte (22, 24, 26, 28) in etwa 1,3 bis 1,10 von der der Außengurte (12, 14) beträgt.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | EP-A-0 050 462 (DAN-PAL)<br>* Abbildungen 1,9,10; Seite 5, Zeilen 11-33 *<br>--- | 1-6 | E 04 C 2/54 |
| Y | EP-A-0 054 856 (BAYER AG)<br>* Abbildung 3d; Seite 1, Zeile 1 - Seite 2, Zeile 23; Seite 3, Zeilen 1-10 *<br>----- | 1-6 | |

RECHERCHIERTE
SACHGEBIETE (Int. Cl.4)

E 04 C

Der vorliegende Recherchenbericht wurde für alle Patentansprüche erstellt

| Recherchenort | Abschlußdatum der Recherche | Prüfer |
|---|---|---|
| DEN HAAG | 22-06-1988 | MYSLIWETZ W.P. |